# FASCICULE DE BREVET EUROPEEN

(11) **EP 2 931 832 B1**
(45) Date de publication et mention de la délivrance du brevet: **17.10.2018**
(21) Numéro de dépôt: 13818204.3
(22) Date de dépôt: 13.12.2013
(51) Int. Cl.: C09K 9/02, G07D 7/12, C09D 5/22, C09D 11/02, D21H 21/48, B41M 3/14, B42D 15/00, B42D 25/00, C09D 11/50, G07D 7/128, B42D 25/425, B42D 25/324, B42D 25/351, B42D 25/387, G07D 7/1205

(54) **COMPOSITION POUR USAGE FIDUCIAIRE ET DOCUMENT DE SÉCURITÉ QUI EN FAIT USAGE**
ZUSAMMENSETZUNG FÜR KENNZEICHNUNGSZWECKE UND SICHERHEITSDOKUMENT DAMIT
COMPOSITION FOR FIDUCIARY USE AND SECURITY DOCUMENT USING SAME

(30) Priorité: 13.12.2012 FR 1262029
(43) Date de publication de la demande: 21.10.2015
(73) Titulaire: Oberthur Fiduciaire SAS, 75008 Paris (FR)
(72) Inventeur: DERMILLY, Ella, F-35510 Cesson Sevigne (FR); EL-SAYED MOUSSA, Mahdi, 93049 Regensburg (DE); LE BOZEC, Hubert, F-35135 Chantepie (FR); REAU, Régis, F-78350 Les Loges en Josas (FR); GILLOT, Julien, F-35410 Veneffles (FR); BORDE, Xavier, F-35410 Osse (FR)
(74) Mandataire: Regimbeau
(86) Numéro de dépôt international: PCT/EP2013/076560
(87) Numéro de publication internationale: WO 2014/090995

(56) Documents cités:
- WO-A1-2012/080467
- US-A1- 2009 129 053
- YOSHIMITSU SAGARA ET AL: "Material Design for Piezochromic Luminescence: Hydrogen-Bond-Directed Assemblies of a Pyrene Derivative", JOURNAL OF THE AMERICAN CHEMICAL SOCIETY, vol. 129, no. 6, 1 février 2007 (2007-02-01), pages 1520-1521, XP055074689, ISSN: 0002-7863, DOI: 10.1021/ja0677362
- BRENT R. CRENSHAW ET AL: "Deformation-Induced Color Changes in Melt-Processed Photoluminescent Polymer Blends", CHEMISTRY OF MATERIALS, vol. 15, no. 25, 1 décembre 2003 (2003-12-01), pages 4717-4724, XP055074704, ISSN: 0897-4756, DOI: 10.1021/cm034447t

## Description

L'invention se situe dans le domaine de l'industrie fiduciaire et plus particulièrement dans la fabrication de documents de sécurité.

La présente invention concerne d'une part une composition pour usage fiduciaire contenant un composé mécano-luminescent réversible et d'autre part, un document de sécurité qui est revêtu ou qui contient cette composition.

On entend par l'expression "document de sécurité", un document, par exemple en papier, en plastique ou en un composite des deux matériaux, qui inclut en son sein et/ou est revêtu de moyens permettant d'en sécuriser la fabrication, de manière à en rendre la reproduction frauduleuse impossible ou à tout le moins particulièrement complexe, et d'en assurer l'authentification.

Ainsi, on a déjà recours, par exemple pour la fabrication de billets de banque, à des impressions réalisées à l'aide d'encres invisibles à l'oeil nu, mais détectables (luminescentes) sous un rayonnement ultraviolet. De telles encres luminescentes (c'est-à-dire fluorescentes ou phosphorescentes) sous une ou plusieurs longueurs d'ondes d'excitation sont ainsi largement utilisées dans le domaine de l'impression de sécurité.

Dans un tel cas, une photocopie réalisée frauduleusement ne reproduira pas cet effet de luminescence, ce qui constituera une preuve du défaut d'authenticité du document.

Toutefois, l'utilisation et la diffusion massive de ces encres, notamment dans des secteurs autres que l'impression fiduciaire (par exemple pharmacie, peinture décorative, jouets, etc.) a facilité leur approvisionnement par des filières non sécurisées (via Internet par exemple) rendant ainsi la contrefaçon plus aisée.

La présente invention a donc pour objectif de renforcer encore le niveau de sécurité de documents intégrant ces encres, en proposant différentes compositions mécano-luminescentes réversibles, très différentes des compositions seulement luminescentes existant sur le marché.

Par le terme "mécano-luminescence", on désigne la capacité que possède un composé à devenir luminescent ou à changer de couleur de luminescence, ou encore à modifier, de préférence à augmenter, l'intensité de sa luminescence, sous l'effet d'une sollicitation mécanique quelconque, telle qu'une pression, une friction ou une flexion.

Parmi les composés "mécano-luminescents", on désigne de manière plus spécifique par le terme de "tribo-luminescent", ceux qui présentent les propriétés précitées sous l'effet d'un frottement ou d'un grattage à l'aide d'un instrument contondant.

Par le terme "réversible", on désigne le fait que ce composé perd la couleur particulière ou l'intensité de la luminescence qu'il avait acquise lors de la sollicitation mécanique, soit en quelques minutes à température ambiante, soit en quelques secondes après un chauffage. En d'autres termes, ce composé retrouve son état initial peu de temps après l'arrêt de la sollicitation mécanique.

On connaît d'après l'article de M. Gorsane et al : « Helicenes : Synthèse Photochimique Et Etude Rmn 19F, 13C et 1H De Fluoro-1-Hexahelicenes Et Fluoro-1-Heptahelicenes », Bulletin des Sociétés Chimiques Belges, vol.94, n°3,1 janvier 1985 (1985-01-01), pages 215-231, un composé comprenant un hydrocarbure aromatique polycyclique résultant de la fusion de 4 cycles benzéniques dont l'un est substitué par un groupement fluor et dont un autre est substitué par un dérivé de type vinyl benzène, et qui est donc différent du composé de formule A proposé dans l'invention, dans lequel l'hydrocarbure aromatique polycyclique n'est pas substitué par un groupement fluor.

En outre, le composé décrit dans cet article n'est pas présenté comme possédant une propriété de luminescence, encore moins de mécanoluminescence.

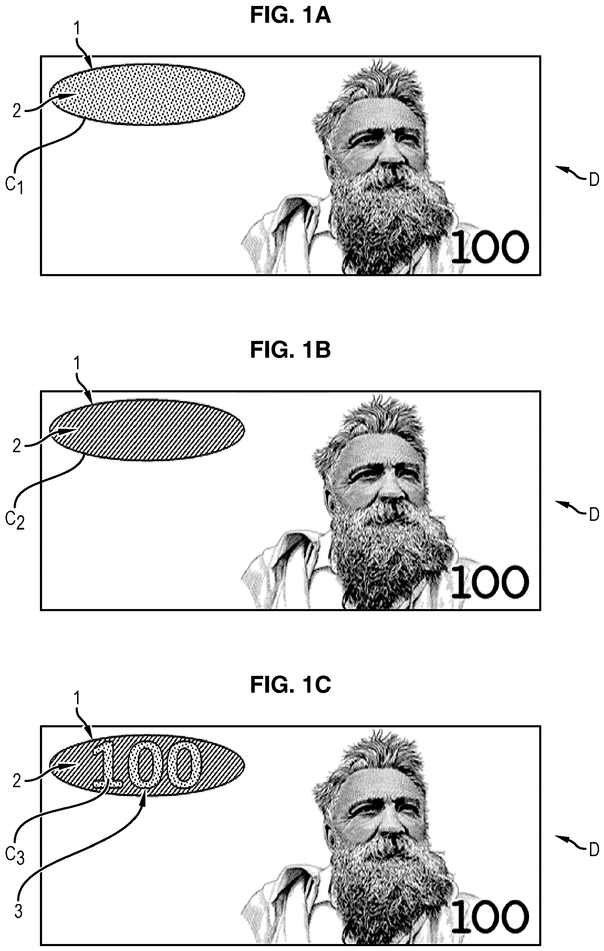

On connaît également d'après l'article de YOSHIMITSU SAGARA ET AL : « Material Design for Piezochromic Luminescence : Hydrogen-Bond-Directed Assemblies of a Pyrene Derivative », JOURNAL OF THE AMERICAN CHEMICAL SOCIETY, vol.129, no. 6, 1 février 2007 (2007-02-01), pages 1520-1521, un composé C6TPPy représenté sur la figure 1 de cet article, mécanoluminescent, mais dont la formule chimique est différente de la formule A de l'invention.

On connaît aussi d'après le document US 2009/129053, un composé cité dans l'exemple 12 qui est simplement luminescent mais non mécanoluminescent réversible.

On connaît enfin d'après le document GB 2 232 119 un procédé de sécurisation d'un document utilisant un composé tribo-luminescent inorganique à base de phosphore.

Le document WO2012080467 décrit un document de sécurité comportant un composé difluoroborate mécanoluminescent réversible.

Le composé précité présente toutefois la particularité de présenter une tribo-luminescence persistante, ce qui ne pose pas de problème quand le produit est présent dans un support dont on veut simplement vérifier l'authenticité, et qui n'est pas destiné à être réutilisé. Ceci est notamment le cas de tickets d'accès à une manifestation culturelle ou sportive, par exemple.

En revanche, dans le cas d'un document de sécurité de type fiduciaire, il est souhaitable que celui-ci ne porte pas visuellement la trace de la sollicitation mécanique qu'il a subie préalablement ou en tout cas que celle-ci n'apparaisse pas de manière particulièrement ostensible.

La présente invention a donc pour objectif de résoudre ces difficultés et de combler les lacunes précitées.

A cet effet, l'invention concerne une composition pour usage fiduciaire.

Conformément à l'invention, cette composition comprend une matrice d'impression, liquide ou pâteuse avant séchage, de préférence incolore, et un composé mécanoluminescent réversible répondant à la formule chimique A suivante : 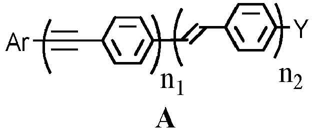 dans laquelle :
- Ar représente un hydrocarbure aromatique polycyclique monosubstitué, résultant de la fusion simple ou multiple de n cycles benzèniques, n étant compris entre 4 et 10,
- n1 est compris entre 0 et 10, n2 est compris entre 0 et 10, n1 et n2 n'étant pas simultanément égaux à 0,
- Y est un groupement organique ou hétéro-organique, choisi exclusivement parmi les groupements cyano, trifluorométhyl, formyl, ester, nitro, halogéno, sulfoxyde, sulfonyl, tricyanoéthènyl, ammonium et phosphonium.

Selon d'autres caractéristiques avantageuses et non limitatives de l'invention, prises seules ou en combinaison :
- ledit composé de formule chimique A y est présent à hauteur de 0,1% à 25% en poids, de préférence de 1% à 10% en poids, de préférence encore de 3% à 8% en poids,
- Ar est un groupement pyrèn-1-yl,
- Ar est un groupement benzo[c]phénantrèn-2-yl,
- ledit composé mécanoluminescent réversible est le composé A dans lequel Ar est un groupement pyrèn-1-yl, n1 est égal à O et n2 est égal à 1,
- ledit composé mécanoluminescent réversible est le composé A dans lequel Ar est un groupement benzo[c]phénantrèn-2-yl, n1 est égal à 1 et n2 est égal à 1,
- ledit composé mécanoluminescent réversible est le composé A dans lequel Ar est un groupement pyrèn-1-yl, n1 est égal à O et n2 est égal à 2,
- ledit composé mécanoluminescent réversible est le composé A dans lequel Ar est un groupement benzo[c]phénantrèn-2-yl, n1 est égal à 1 et n2 est égal à 0,
- Y est le groupe CN,
- ladite matrice d'impression est une encre ou un vernis,
- ladite matrice est choisie parmi une matrice d'impression en offset, sérigraphie, taille-douce, typographie, flexographie, jet d'encre, enduction directe ou héliogravure.

L'invention concerne également un document de sécurité, tel qu'un billet de banque, une carte à puce ou un passeport, revêtu et/ou qui contient un composé mécano-luminescent réversible répondant à la formule chimique A suivante : 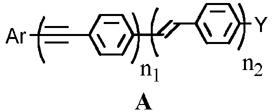 dans laquelle :
- Ar représente un hydrocarbure aromatique polycyclique monosubstitué résultant de la fusion simple ou multiple de n cycles benzèniques, n étant compris entre 4 et 10,
- n1 est compris entre 0 et 10, n2 est compris entre 0 et 10, n1 et n2 n'étant pas simultanément égaux à 0,
- Y est un groupement organique ou hétéro-organique, choisi exclusivement parmi les groupements cyano, trifluorométhyl, formyl, ester, nitro, halogéno, sulfoxyde, sulfonyl, tricyanoéthènyl, ammonium et phosphonium.

Selon d'autres caractéristiques avantageuses et non limitatives de l'invention, prises seules ou en combinaison :
- ledit composé mécano-luminescent réversible de formule A est en surface, il revêt la forme d'une impression et il est initialement contenu avant séchage dans une composition telle que précitée,
- ladite impression présente une épaisseur comprise entre 1 µm et 200 µm,
- ladite impression contenant ledit composé mécano-luminescent réversible de formule A est recouverte par un vernis, destiné à recouvrir en totalité ou partiellement les impressions figurant sur le document de sécurité,
- ladite impression contenant ledit composé mécano-luminescent réversible de formule A est recouverte par un film continu en matériau polymère, destiné à recouvrir en totalité ou partiellement les impressions figurant sur le document de sécurité,
- le document comprend un élément de sécurité constitué d'au moins une zone imprimée, à l'aide d'une composition conforme à l'une des revendications 1 à 11 ladite zone imprimée présentant :
   - une première couleur qui peut être incolore, dans le spectre de la lumière visible,
   - une deuxième couleur différente de la première sous éclairage ultra-violet, et
   - une troisième couleur différente desdites première et deuxième couleurs ou une modification de l'intensité de sa luminescence, lorsque cette zone imprimée est soumise à une sollicitation mécanique toujours sous éclairage ultra-violet, la troisième couleur ou la modification de l'intensité de la luminescence de la deuxième couleur de ladite zone imprimée apparaissant à l'endroit de ladite sollicitation mécanique.
- le document comprend un élément de sécurité constitué d'au moins une zone imprimée, par exemple sous la forme d'un aplat, sur cette zone étant imprimé, par exemple et sans que ce soit limitatif, en offset, sérigraphie ou taille-douce, à l'aide de la composition précitée, au moins un motif,
   - ladite zone et ledit motif présentant dans le spectre de la lumière visible, une première couleur identique ou sensiblement identique et qui peut être incolore;
   - ladite zone et ledit motif présentant sous éclairage ultra-violet, une deuxième couleur identique ou sensiblement identique, différente de ladite première couleur;
   - ledit motif présentant une troisième couleur, différente des première et deuxième couleurs ou une modification de l'intensité de sa luminescence, lorsque ce motif est soumis à une sollicitation mécanique toujours sous éclairage ultra-violet, la troisième couleur ou la modification de l'intensité de la luminescence de la deuxième couleur dudit motif apparaissant à l'endroit de ladite sollicitation mécanique.
- le document comporte un élément de sécurité constitué d'au moins une zone imprimée, par exemple sous la forme d'un aplat, sur cette zone étant imprimé, par exemple et sans que ce soit limitatif, en offset, sérigraphie ou taille-douce, à l'aide d'une composition telle que précitée, au moins un motif,
   - ladite zone et ledit motif présentant respectivement une première couleur et une deuxième couleur différentes dans le spectre de la lumière visible ;
   - ladite zone et ledit motif présentant respectivement une troisième couleur différente de la première couleur et une quatrième couleur différente de la deuxième couleur, sous éclairage ultra-violet ;
   - ledit motif présentant une cinquième couleur, différente des précédentes couleurs ou une modification de l'intensité de la luminescence de la quatrième couleur, lorsqu'il est soumis à une sollicitation mécanique, toujours sous éclairage ultra-violet.
- le document comporte un élément de sécurité constitué d'au moins une zone imprimée, par exemple sous la forme d'un aplat, sur cette zone étant imprimé, par exemple et sans que ce soit limitatif, en offset, sérigraphie ou taille-douce, à l'aide d'une composition telle que précitée, au moins un motif, ainsi, qu'au moins une région texturée abrasive, de sorte que par superposition de la région texturée abrasive sur ledit motif et sollicitation mécanique sous éclairage ultra-violet, ledit motif devient visible sous une couleur différente de sa couleur initiale ou présente une modification de l'intensité de sa luminescence,
- le document présente une partie transparente et ladite région texturée y est intégrée,
- le document comporte un élément de sécurité constitué d'au moins une zone imprimée, par exemple sous la forme d'un aplat, sur cette zone étant imprimés, par exemple et sans que ce soit limitatif, en offset, sérigraphie ou en taille-douce, plusieurs motifs dont l'un au moins à l'aide d'une composition telle que précitée, et il présente une partie transparente comportant une région texturée abrasive qui présente la même forme que ledit motif imprimé à l'aide de ladite composition, de sorte que par superposition et sollicitation mécanique sous éclairage ultra-violet, ledit motif devient visible sous une couleur différente de sa couleur initiale ou présente une modification de l'intensité de sa luminescence,
- ladite région texturée est obtenue par embossage de type timbre sec ou en taille-douce encrée,
- le document comporte un élément de sécurité constitué d'au moins une zone imprimée, par exemple sous la forme d'un aplat, sur cette zone étant imprimée, par exemple et sans que ce soit limitatif, en offset, sérigraphie ou en taille-douce, au moins un motif comprenant deux régions adjacentes, l'une de ces régions étant imprimée à l'aide d'une composition telle que précitée,
- ladite impression, ladite zone imprimée ou ledit motif est réalisé par l'un des procédés suivants : offset, sérigraphie, taille-douce, typographie, flexographie, jet d'encre, enduction directe et héliogravure.

D'autres caractéristiques et avantages de l'invention apparaîtront de la description qui va maintenant en être faite, en référence aux dessins annexés, qui en représentent, à titre indicatif mais non limitatif, un mode de réalisation possible.

Sur ces dessins :
- les figures 1A à 1C, 2A à 2C, 3A et 3B, 4A à 4C, 5A à 5C, et 6A à 6C sont des vues de dessus de six exemples de réalisation d'un document de sécurité conforme à l'invention,
- et la figure 7 est une courbe représentant le spectre d'émission de l'un des composés à mécano-luminescence réversible utilisé dans l'invention (exprimé en nanomètres), avant et après frottement.

L'invention se rapporte à une composition pour usage fiduciaire comprenant une matrice d'impression liquide ou pâteuse avant séchage, de préférence incolore et un composé mécano-luminescent réversible, répondant à la formule chimique A mentionnée précédemment.

Par " composition pour usage fiduciaire", on entend une composition d'impression (c'est-à-dire une composition pour imprimer) des documents fiduciaires.

Par " matrice d'impression ", on entend une matrice pour réaliser une impression dans ou sur un document.

De préférence, le composé de formule A est utilisé à l'état de dopant dans cette matrice.

Dans tous les cas, on notera que Ar est un groupement monosubstitué par le groupement représenté sur la droite de la formule A.

De préférence, Ar est un groupement pyrèn-1-yl ou un groupement benzo[c]phénantrèn-2-yl.

Le demandeur a constaté qu'il est possible de moduler la couleur de la fluorescence initiale du composé de formule A simplement en changeant les groupements Ar ou en modifiant la longueur du système π conjugué. Cette couleur de fluorescence initiale peut être bleue, jaune ou orange, par exemple.

De plus, en fonction des substituants choisis, il est possible d'observer après friction, soit un changement de couleur de luminescence, soit une augmentation de l'intensité de cette couleur de luminescence initiale. Cette luminescence peut être une fluorescence ou une phosphorescence.

A titre d'exemples non limitatifs, le composé de formule A peut plus particulièrement prendre la forme des composés (I), (II), (III) ou (IV) ci-dessous :

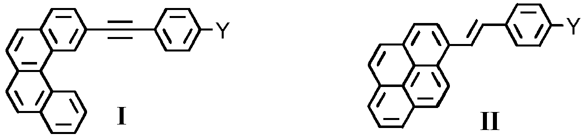

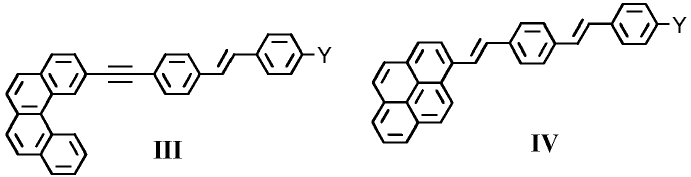

Y ayant la même signification que précédemment.

On donnera ci-après plusieurs exemples de synthèse de différents composés de formule I, II, III et IV.

### Synthèse et exemples de composés de formule I :

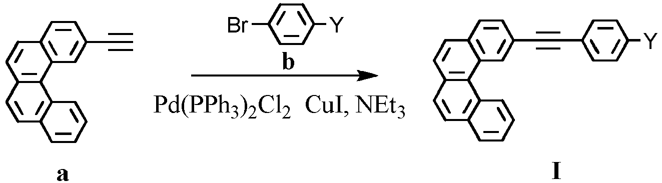

Le composé 2-éthynylbenzo[c]phenanthrène (a) est déjà décrit dans la littérature (voir : Tetrahedron Letters 38, no. 12 (1997): 2145-2148.). Cet alcyne vrai est engagé dans les conditions classiques d'un couplage de Sonogashira avec le 4-bromobenzène substitué en para avec le groupement Y souhaité (produit b) pour conduire au composé de formule I. Ces composés ont été caractérisés par spectroscopie RMN du proton et du carbone et par des analyses élémentaires.

### Mode opératoire général :

### Composé I-a :

Dans un tube de Schlenk, sous argon, le 2-éthynylbenzo[c]phénanthrène (a) (100 mg, 0.4 mmol), le composé (b) (1,1 eq), Pd(PPh3)2Cl2 (5 % mol), et Cul (5 % mol) sont séchés sous vide pendant une heure, puis 10 mL de triéthylamine préalablement dégazées sont ajoutés. L'ensemble est agité et chauffé à 70°C pendant 16 heures. Après évaporation du solvant, le résidu est purifié par chromatographie sur gel de silice avec un éluant 95/5 : heptane / acétate d'éthyle. Le composé I-a est obtenu sous forme d'une poudre jaune avec un rendement de 53%.

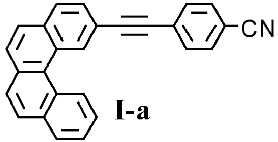

Les résultats de spectroscopie RMN sont les suivants :
RMN 1H (400 MHz, CDCl3): 9.25 (s, 1H) ; 9.11 (d, J = 8.4 Hz, 1H); 8.06 (d, J = 7.6 Hz, 1H); 8.03 (d, J = 8.0 Hz, 1H) ; 7.95 (d, J = 8.4 Hz, 1H) ; 7.90 (m, 2H) ; 7.85 (d, J =8.8 Hz, 1H) ; 7.79-7.74 (m, 2H) ; 7.72-7.67 (m, 5H).
RMN 13C (100.6 MHz, CDCl3) : 165.2 ; 133.6 ; 133.4 ; 132.2 ; 132.1 ; 131.9 ; 131.4 ; 130.1 ; 130.0 ; 128.8 ; 128.7 ; 128.3 ; 128.2 ; 128.1 ; 127.7 ; 127.1 ; 127.0 ; 126.7 ; 126.6 ; 126.2 ; 119.8 ; 118.6 ; 111.5 ; 94.8 ; 88.3.

### Composé I-b :

Le composé l-b a été synthétisé en suivant le mode opératoire déjà décrit ci-dessus.

Eluant 98/2: heptane / acétate d'éthyle. Le composé l-b est obtenu sous la forme d'une poudre jaune avec un rendement de 65%.

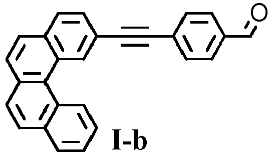

Les résultats de spectroscopie RMN sont les suivants :
RMN 1H (400 MHz, CDCl3): 10.04 (s, 1H) ; 9.34 (s, 1H) ; 9.13 (d, J = 8.4 Hz, 1H) ; 8.06 (d, J = 7.6 Hz, 1H) ; 8.01 (d, J = 8.0 Hz, 1H) ; 7.94 (d, J = 8.4 Hz, 1H) ; 7.91-7.90 (m, 1H) ; 7.89-7.87 (m, 3H) ; 7.83 (d, J = 8.8 Hz, 1H) ; 7.78-7.76 (m, 2H) ; 7.76-7.75 (m, 1H) ; 7.70-7.66 (m, 1H).
RMN 13C (100.6 MHz, CDCl3): 191.4; 135.4; 133.7; 133.3; 132.2; 131.8; 131.4; 130.1 ; 130.0; 129.7; 129.6; 128.8; 128.7; 128.4; 128.1 ; 128.0 ; 127.7 ; 127.1 ; 127.0 ; 126.7 ; 126.6 ; 126.2 ; 120.1 ; 94.5 ; 89.2.

### Composé I-c :

Le composé l-c a été synthétisé en suivant le même mode opératoire.

Eluant 98/2: heptane / acétate d'éthyle, puis recristallisation dans un mélange dichlorométhane/ pentane. Le composé l-c est obtenu sous forme de poudre jaune pâle avec un rendement de 60%.

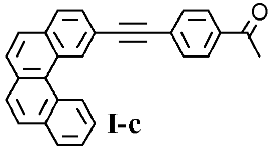

Les résultats de spectroscopie RMN sont les suivants :
RMN 1H (400 MHz, CDCl3): 9.33 (s, 1H) ; 9.13 (d, J = 8.4 Hz, 1H) ; 8.39 (d, J = 7.2 Hz, 1H) ; 8.00-7.96 (m, 3H) ; 7.92 (d, J = 8.4 Hz, 1H) ; 7.88 (d, J = 8.8 Hz, 1H) ; 7.85 (d, J = 8.4 Hz, 1H) ; 7.82 (d, J = 8.8 Hz,1H) ; 7.79-7.74 (m, 2H) ; 7.70-7.65 (m, 3H) ; 2.62 (s, 3H).
RMN 13C (100.6 MHz, CDCl3) : 197.3 ; 136.2; 133.6; 133.3; 131.8; 131.7 ; 131.4; 130.1 ; 130.0; 128.7; 128.6; 128.5; 128.3; 128.1 ; 128.0 ; 127.8 ; 127.1 ; 127.0 ; 126.7 ; 126.6 ; 126.2 ; 120.3 ; 93.8 ; 89.2 ; 26.6.

### Composé I-d :

Le composé I-d a été synthétisé suivant le même mode opératoire.

Eluant 98/2: heptane / acétate d'éthyle, puis recristallisation dans un mélange dichlorométhane/ pentane. Le composé est obtenu sous forme d'une poudre jaune pâle avec un rendement de 55%.

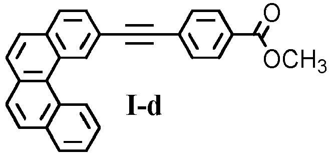

Les résultats de spectroscopie RMN sont les suivants :
RMN 1H (400MHz, CDCl3): 9.33 (s, 1H) ; 9.12 (d, J = 8.0 Hz, 1H) ; 8.07-8.04 (m, 3H) ; 8.00 (d, J = 8.0 Hz, 1H) ; 7.95 (d, J = 8.4 Hz, 1H) ; 7.94-7.88 (m, 2H) ; 7.83 (d, J = 8.0 Hz, 1H) ; 7.81-7.76 (m, 2H) ; 7.71-7.67 (m, 3H) ; 3.95 (s, 3H).
RMN 13C (100.6 MHz, CDCl3): 166.6 ; 133.6 ; 133.3 ; 131.7 ; 131.6 ; 131.4 ; 130.2 ; 130.1 ; 130.0 ; 129.6 ; 129.5 ; 128.7 ; 128.6 ; 128.5 ; 128.1 ; 128.0 ; 127.8 ; 127.1 ; 127.0 ; 126.7 ; 126.0 ; 126.15 ; 120.4 ; 93.4 ; 89.2; 52.2.

Ces quatre composés possèdent la propriété de mécano-luminescence ou plus précisément de mécanofluorochromisme (émission de couleur fluorescente après excitation mécanique). Lorsqu'ils sont déposés sur une feuille de papier, ils sont fluorescents bleus. Après perturbation mécanique à l'aide d'une spatule, cette fluorescence devient plus intense. Cette variation d'intensité est parfaitement visible à l'oeil nu. Le retour à l'état initial se fait en quelques secondes par chauffage (100°C) ou en quelques minutes à température ambiante.

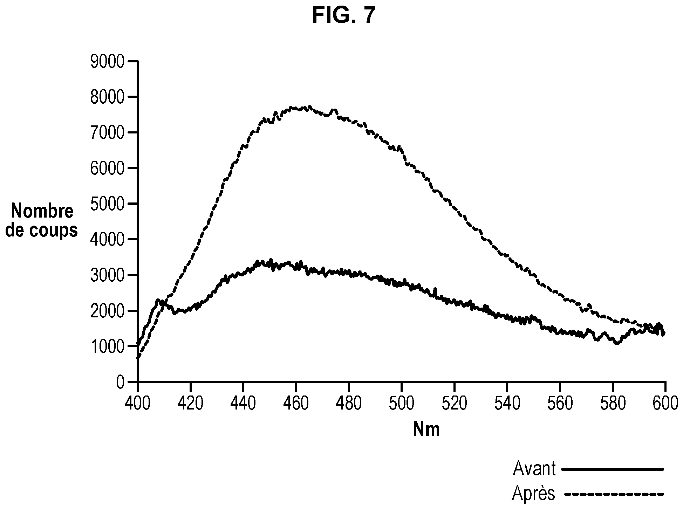

Les résultats d'essais effectués avec le composé l-c sont représentés à titre d'exemple sur la figure 7. Lorsque le composé l-c est déposé sur du papier fiduciaire, une fluorescence bleue est observée. Le spectre d'émission montre une bande très large et peu intense avec un maximum à 448 nm. (courbe en trait plein). Après frottements, et sous éclairage ultra-violet, on observe un léger déplacement de cette bande large centrée sur 465 nm, accompagné d'une augmentation significative de l'intensité de cette fluorescence (courbe en pointillés). Ce spectre montre bien une grande différence d'émission entre un état faiblement fluorescent, à l'état initial, et fortement fluorescent après frottements.

### Synthèse et exemple d'un composé de formule II :

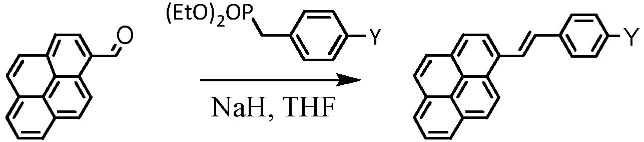

Les composés de la famille II sont obtenus par réaction de Wadsworth-Emmons sur le pyrène-1-carbaldéhyde en présence du diéthylphosphonate substitué en position 4 par le groupement Y.

### Composé II-a :

### Mode opératoire :

Dans un tube de Schlenck, sous argon, le diéthylphosphonate possédant le g (5.90 mmol, 1 eq) est ajouté à une suspension de NaH (720 mg) dans 100 mL de Tétrahydrofurane (THF) fraichement distillé. Le mélange est agité pendant 2 heures à température ambiante, puis le pyrène-1-carbaldéhyde (1eq) est additionné. Après une nuit d'agitation à température ambiante, le mélange est filtré sur silice. Le composé II-a est obtenu après évaporation du solvant et recristallisation dans un mélange dichlorométhane/pentane sous forme d'un solide avec un rendement de 67%.

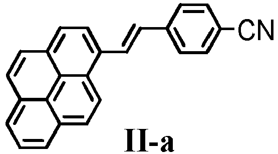

Les résultats de spectroscopie RMN sont les suivants :
RMN 1H (500 MHz, CDCl3): δ = 7.23 (d, *J* = 16.0 Hz, 1 H), 7.62 (s (!), 4 H), 7.99 - 8.08 (m, 3 H), 8.11 - 8.15 (m, 2 H), 8.18 - 8.20 (m, 3 H), 8.25 (d, *J* = 8.0 Hz, 1 H), 8.40 (d, *J* = 9.6 Hz, 1 H).
NMR 13C (126 MHz, CDCl3): δ = 110.5, 119.0, 122.5, 123.6, 124.8, 125.0, 125.1, 125.4, 125.7, 126.2, 126.9, 127.4, 127.8, 128.0, 128.7, 129.1, 129.4, 130.5, 130.7, 131.4, 131.5, 132.5, 142.0.

Notre étude montre que ce composé possède la propriété de mécanofluorochromisme réversible. A l'état pur, lorsqu'il est étalé sur du papier, sa fluorescence initiale est jaune. Suite à une perturbation mécanique de type friction avec une spatule, cette couleur de fluorescence devient orange. Le retour à la couleur de fluorescence initiale jaune se fait en quelques minutes à température ambiante ou en quelques secondes par chauffage (100°C).

### Synthèse et exemple d'un composé de formule III :

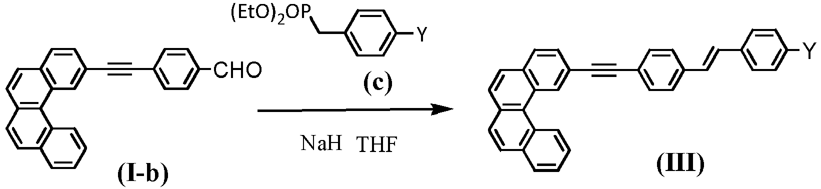

L'aldéhyde l-b obtenu précédement est engagé dans une réaction de Wadsworth-Emmons en présence de diéthylphosphonate substitué en position 4 par le groupement Y, pour conduire au composé III.

### Mode opératoire de la synthèse du composé III-a :

L'aldéhyde (I-b) obtenu précédemment est engagé dans une réaction de Wadsworth-Emmons pour conduire au composé III-a.

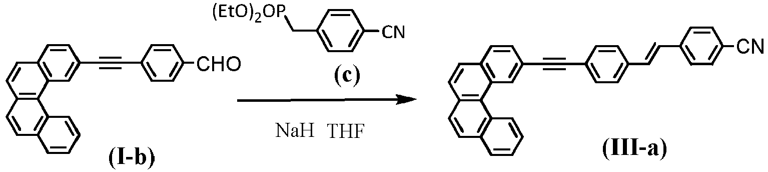

Dans un tube de Schlenk, sous argon, le diéthyl-4-cyanobenzylphosphonate (c) (134 mg, 0.563 mmol) est ajouté à une suspension de NaH (70 mg, 2.92 mmol) dans 70 mL de Tétrahydrofurane (THF) fraichement distillé. Le mélange est agité pendant 2 heures à température ambiante, puis le 4-(benzo[c]phénanthrèn-2-yléthynyl)benzaldéhyde (I-b) est additionné. Après une nuit d'agitation à température ambiante, le mélange est filtré sur silice. Le composé III-a est obtenu après évaporation du solvant et recristallisation dans un mélange dichlorométhane/pentane sous forme d'un solide jaune (204 mg), avec un rendement de 80%.

Les résultats de spectroscopie RMN sont les suivants :
RMN 1H (400MHz, CDCl3) : 9.35 (s, 1H) ; 9.17 (d, J = 8.5 Hz, 1H) ; 8.07 (d, J = 7.5 Hz, 1H) ; 8.03 (d, J = 8.0 Hz, 1H) ; 7.96 (d, J = 8.5 Hz, 1H) ; 7.92 (d, J = 8.5 Hz, 1H) ; 7.88 (d, J = 8.5 Hz, 1H) ; 7.86 (d, J = 8.5 Hz, 1H) ; 7.81-7.77 (m, 2H) ; 7.71-7.65 (m, 5H) ; 7.61 (d, J = 8.0 Hz, 2H) ; 7.57 (d, J = 8.0 Hz, 2H) ; 7.24 (d, J = 16 Hz, 1H); 7.15 (d, J = 16Hz, 1H).
RMN 13C (100.6 MHz, CDCl3) : 90.0 ; 92.0 ; 110.8 ; 119.0 ; 120.1 ; 123.5; 126.1 ; 126.6; 126.8; 126.9 (5 pics) ; 127.0 ; 127.1 ; 127.5 ; 127.8 ; 127.9 ; 128.5 ; 128.6 ; 128.7 ; 130.1 ; 130.2 ; 131.4 ; 131.5 ; 131.6 ; 132.2 ; 132.5 (2 signaux) ; 132.5 (2 signaux) ; 133.1 ; 133.6 ; 136.2 ; 141.5.

A l'état solide pur, ce composé III-a possède la propriété de mécanofluorochromisme réversible. Lorsqu'il est étalé sur du papier, sa fluorescence initiale est bleue (2 bandes d'émission à 447 nm et 469 nm). Suite à une perturbation mécanique de type friction avec une spatule, cette couleur de fluorescence devient verte (475 nm). Le retour à la couleur de fluorescence initiale bleue se fait en quelques minutes à température ambiante ou en quelques secondes par chauffage (100°C).

### Synthèse et exemple d'un composé de formule IV :

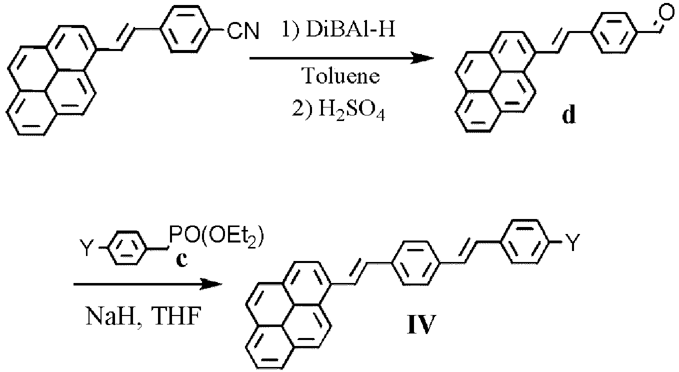

Dans une première étape, la fonction cyano du composé II-a est réduite par le DiBAl-H puis hydrolysée. Le composé (d) obtenu est ensuite engagé dans une réaction de Wadsworth-Emmons en présence de diéthylphosphonate substitué en position 4 par le groupement Y, permet d'obtenir le composé IV.

### Composé IV-a :

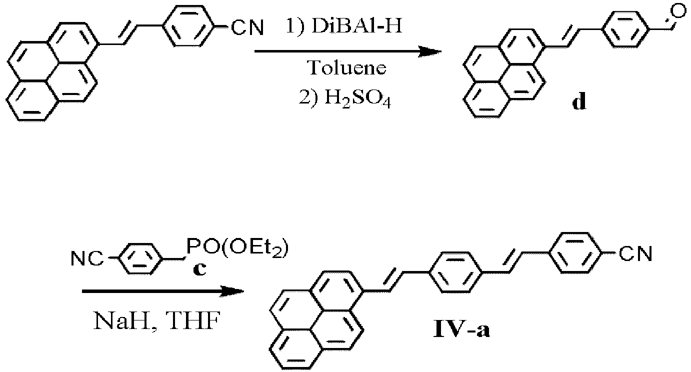

Dans une première étape, la fonction cyano du composé II-a est réduite par le DiBAl-H puis hydrolysée. Le composé (d) obtenu est ensuite engagé dans une réaction de Wadsworth-Emmons en présence du phosphonate (c), afin d'obtenir le composé IV-a.

### Mode opératoire :

Dans un tube de Schlenk, sous argon, le (E)-4-(2-(pyrén-1-yl)vinyl)benzonitrile (300mg, 0,91 mmol) est solubilisé dans 25 mL de toluène. Le DibAl-H (0,23 mL. 1,37 mmol. 1,5 eq) est ajouté puis l'ensemble est agité et chauffé à 30°C pendant la nuit. Le mélange est hydrolysé par ajout d'une solution aqueuse d'acide sulfurique. La phase aqueuse est ensuite extraite par du toluène. La phase organique est séchée sur MgSO4, filtrée et le solvant est évaporé. Le produit est isolé par chromatographie sur gel de silice (éluant 95/5 : heptane/acétate d'éthyle), sous forme d'une poudre jaune (150 mg), rendement 49%. Le produit est ensuite engagé dans la réaction de Wadsworth-Emmons avec les mêmes conditions que celles présentées dans le cas du composé III-a.

Les résultats de spectroscopie RMN sont les suivants :
RMN 1H (CD2Cl2, 400MHz) : 8.56 (d, J = 9.2 Hz, 1H) ; 8.39 (d, J = 8.0 Hz, 1H) ; 8.29 (d, J = 16.4 Hz, 1H) ; 8.22 (d, J = 8.0 Hz, 2H) ; 8.19 (d, J = 9.2 Hz, 1H) ; 8.09 (s, 2H) ; 8.03 (m, 1H) ; 7.75 (d, J = 8.0 Hz, 2H), 7.69-7.63 (m, 7H) ; 7.42 (d, J = 16.0 Hz, 1H) ; 7.30 (d, J = 16.4 Hz, 1H) ; 7.20 (d, J = 16.0 Hz, 1H).
RMN 13C (CD2Cl2, 100.6MHz): 141.8; 138.1; 136.0; 132.6; 132.5 ; 131.8 ; 131.5 ; 131.0 ; 130.9 ; 128.4 ; 127.7 ; 127.4 (2 signaux) ; 127.3 ; 127.2; 126.8; 126.7; 126.1 ; 125.9; 125.4; 125.4; 125.1 ; 123.5; 122.9; 110.6.

A l'état solide pur, ce composé IV-a possède la propriété de mécanofluorochromisme réversible. Lorsqu'il est étalé sur du papier, sa fluorescence initiale est orange (λ = 585 nm). Suite à une perturbation mécanique de type friction avec une spatule, cette couleur de fluorescence devient jaune-orange. Le retour à la couleur de fluorescence initiale se fait en quelques secondes par chauffage (100°C).

La matrice d'impression utilisée dans la composition pour usage fiduciaire est une matrice liquide ou pâteuse avant séchage, de préférence incolore pour ne pas interférer avec les changements de couleurs ou d'intensité du composé de formule A précité.

Cette matrice est par exemple une encre ou un vernis. Elle peut également être choisie parmi une matrice d'impression :
- offset, par exemple une matrice appelée en termes du métier "blanc transparent" portant la référence 9C00005 disponible auprès de la société SICPA, une telle matrice est principalement constituée d'huiles végétales siccatives, de solvants, de résines et d'additifs (charges, siccatifs, etc...),
- sérigraphique, par exemple une matrice incolore pour une impression en sérigraphie à séchage aux ultra-violets, telle que celle référencée 9ZOD000 chez SICPA et principalement constituée de monomères, d'oligomères et de solvants,
- taille-douce, par exemple une matrice blanc transparent, telle que celle référencée 9SL00205 de la société SICPA,
- typographique,
- flexographique,
- à jet d'encre,
- par enduction directe, connue de l'homme du métier sous l'appellation de "coating direct",
- pour héliogravure,
- ou un vecteur apte à imprégner directement le papier durant sa fabrication, par exemple à l'étape du sizing qui se trouve être un procédé d'imprégnation des fibres par une solution ou sauce de couchage en règle générale majoritairement à base de PVA (alcools polyvinyliques) et destinée à boucher les pores du papier, à le protéger des agressions extérieures et à en faciliter l'impression.

De façon avantageuse, dans la composition à usage fiduciaire le composé de formule A est présent à hauteur de 0,1% à 25% en poids, de préférence entre 1% et 10% en poids, de préférence encore entre 3% et 8% en poids.

Plus l'épaisseur d'impression est faible et plus le pourcentage du composé A dans la composition doit être élevé pour que le phénomène de mécano-luminescence soit observable. Avec des épaisseurs d'impression plus épaisses, on peut avoir un plus faible pourcentage du composé de formule A.

Les impressions réalisées avec la composition fiduciaire selon l'invention sont de préférence comprises entre 1 µm et 200 µm.

Trois exemples de compositions fiduciaires sont donnés ci-après.

### Exemple de composition fiduciaire n°1 :

Le composé II-a est introduit à hauteur de 5% en poids dans une matrice de type encre ou vernis « blanc transparent » pour impression taille douce. L'encre ou le vernis est ensuite appliqué sur le papier fiduciaire selon des méthodes connues de l'homme de l'art.

Dans cette matrice, le composé est fluorescent jaune. Après perturbation mécanique à l'aide d'une spatule, on observe une augmentation de l'intensité de la fluorescence jaune. Le contraste entre les zones perturbées et non perturbées est excellent et aisément identifiable. Cette variation d'intensité est réversible à température ambiante en quelques minutes ou en quelques secondes par chauffage. Le composé II-a peut donc être utilisé comme dopant dans une matrice tout en conservant sa propriété.

### Exemple de composition fiduciaire n° 2 :

Une deuxième composition fiduciaire est obtenue en mélangeant le composé III-a à hauteur de 5% en poids dans une matrice de type encre ou vernis, « blanc transparent », pour impression taille douce.

Dans cette matrice, comme à l'état pur, le composé est fluorescent bleu. Après perturbation mécanique à l'aide d'une spatule, on observe une augmentation de l'intensité de la fluorescence initiale. Le contraste entre les zones perturbées et non perturbées est très bon. La réversibilité de la propriété est obtenue en quelques secondes par chauffage (100°C).

### Exemple de composition fiduciaire n° 3 :

Le composé IV-a est introduit à hauteur de 5% en poids dans une matrice de type encre ou vernis, « blanc transparent » pour impression taille douce. Dans cette matrice, le composé conserve sa fluorescence orange. On observe également dans ce cas, une augmentation de l'intensité de fluorescence après perturbation mécanique. Le retour à l'état initial se fait par chauffage en quelques secondes (100°C).

La composition conforme à l'invention incluant le composé mécano-luminescent de formule A précité se prête également à une introduction au sein d'un document de sécurité, par exemple dans la pâte à papier lorsqu'il s'agit d'un billet ou dans une matière plastique lorsqu'il s'agit d'une carte, par exemple une carte d'identité.

Nous décrirons ci-après quelques exemples de réalisation, en référence aux dessins précités.

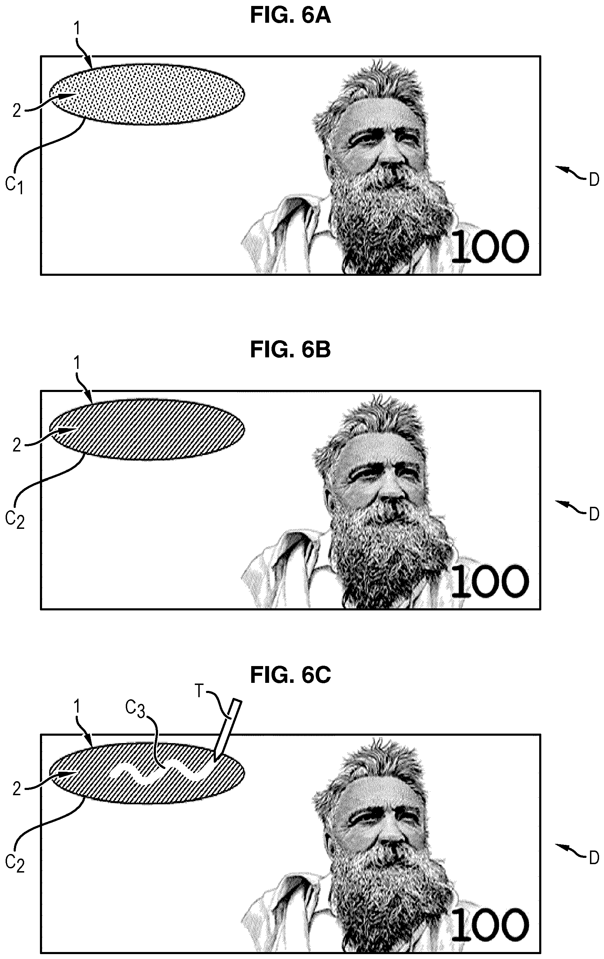

Ainsi, aux figures 6A à 6C est représenté un premier mode de réalisation dans lequel le document selon l'invention consiste en un billet de banque D.

Comme on peut le voir sur la figure 6A, le document D comprend un élément de sécurité 1 constitué d'une zone 2 imprimée à contour ovale. Cette zone présente une première couleur C1, qui peut éventuellement être incolore, dans le spectre de la lumière visible.

Sous un éclairage fluorescent (ultra-violet) représenté sous la figure 6B, cette zone 2 s'illumine d'une deuxième couleur C2, différente de la première.

Enfin, comme représenté sous la figure 6C, toujours sous l'éclairage ultra-violet et à l'endroit soumis à une sollicitation mécanique (ici avec un outil contondant T), la zone imprimée 2 prend une troisième couleur C3 différente desdites première et deuxième couleurs C1, C2, ou présente une modification de l'intensité de sa luminescence.

Un autre mode de réalisation va maintenant être décrit en liaison avec les figures 1A à 1C.

Comme le montre la figure 1A, ce billet comporte un élément de sécurité 1 constitué ici d'une zone 2 à contour oval, imprimée sous la forme d'un aplat qui, en variante, peut être ajouré.

Sur cette zone est imprimé, en sérigraphie ou en taille-douce, un motif 3 reproduisant ici la valeur faciale du billet de banque, en l'occurrence le chiffre « 100 ».

Dans ce mode de réalisation, aussi bien la zone 2 que le motif 3 présentent une couleur identique ou sensiblement identique C1, et qui peut être incolore, dans le spectre de la lumière visible. C'est donc la situation de la figure 1A dans laquelle le motif 3 n'est pas perceptible, ou l'est difficilement.

Cette zone 2 ainsi que le motif 3, sous un éclairage fluorescent (ultra-violet) s'illuminent d'une même couleur, ou d'une couleur sensiblement identique en teinte, par exemple sous la couleur jaune (référencée C2 sur la figure), (différente de la première C1).

Toujours sous éclairage fluorescent (ultra-violet), une friction exercée sur l'élément de sécurité 1 va provoquer un changement de luminescence (fluorescence) du motif 3, et révélant la valeur « 100 » sous une couleur de fluorescence différente C3, par exemple orange ou va provoquer une modification de l'intensité de sa luminescence révélant également la valeur « 100 ».

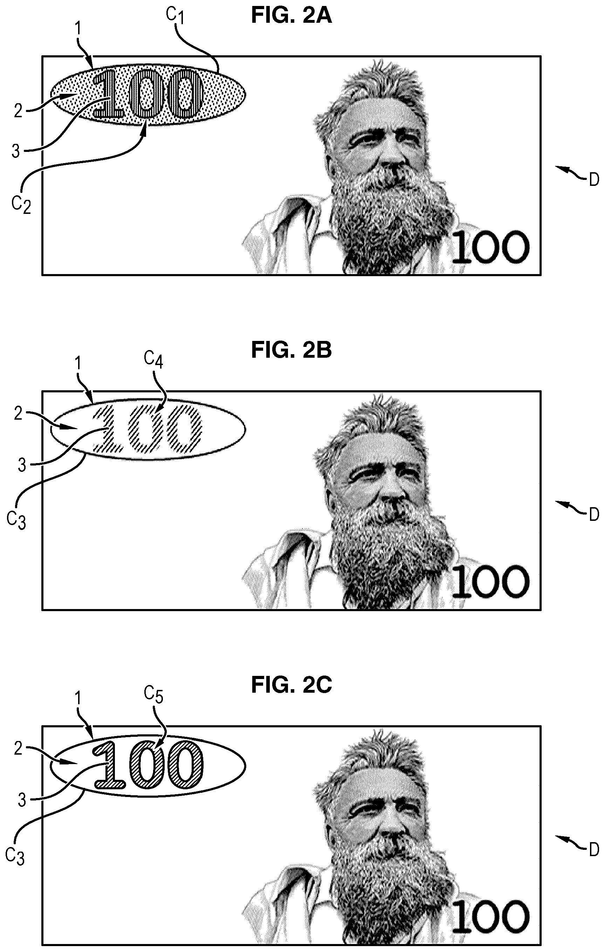

Dans le mode de réalisation de la figure 2A, l'élément de sécurité 1 est constitué d'une zone 2 imprimée sous la forme d'un aplat qui, en variante, peut être ajouré. Cette zone présente une couleur C1 dans le spectre de la lumière visible.

Un motif 3, qui ici aussi représente la valeur « 100 », est imprimé sur la zone 2 en sérigraphie ou en taille-douce et sa couleur C2 est différente de celle de la zone 2. Dans ces conditions, le motif 3 est visible à l'oeil nu.

Lorsque l'on éclaire l'élément de sécurité par un éclairage fluorescent, la zone 2 et le motif 3 émettent alors respectivement une troisième couleur C3 différente de la première couleur C1 et une quatrième couleur C4 différente de la deuxième couleur C2. C'est la situation de la figure 2B. Toujours sous éclairage fluorescent, la friction de l'élément de sécurité 1 par un outil pointu provoque un changement de fluorescence du motif 3, révélant la valeur « 100 » dans une cinquième couleur différente C5 (Voir Figure 2C) ou dans un changement de l'intensité de sa luminescence.

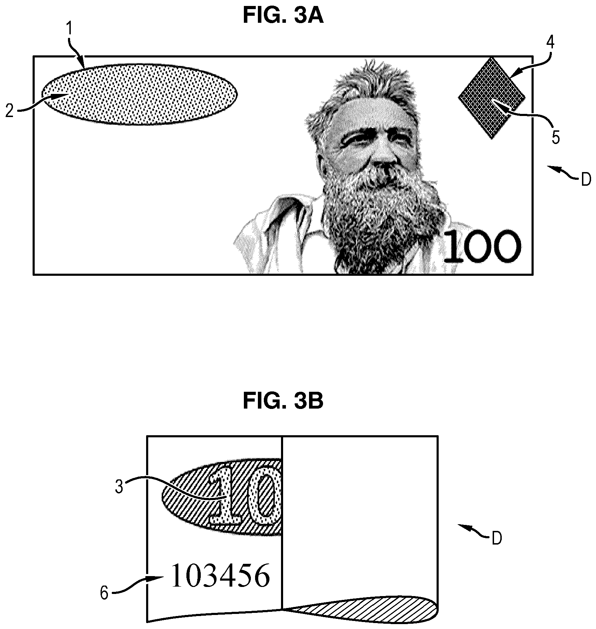

En référence aux figures 3A et 3B, on a ici affaire à un billet du même type général que celui présenté plus haut.

Toutefois, ce billet comporte une région texturée abrasive 5 de papier, d'encre ou bien un élément plastique ajouté sur le papier qui, dans une variante, pourrait être une partie transparente du billet. Cette région texturée abrasive est par exemple obtenue par embossage de type timbre sec ou en taille-douce sans encre mais peut être aussi obtenue dans une version encrée.

Dans le spectre de la lumière visible et comme montré à la figure 3A, la zone 2 et son motif (non distinguable ici, par conséquent) présentent la même couleur.

Toutefois, en repliant la région texturée abrasive 5 au-dessus de la zone 2 et en opérant une friction sous éclairage ultra-violet, on révèle alors, par modification de sa couleur ou de son intensité de fluorescence, le motif 3 du billet.

Ce motif 3 peut par exemple être constitué d'une suite de chiffres qu'il est possible par exemple de comparer avec le numéro du billet, lequel, référencé 6, est imprimé sur la même face que le motif 3.

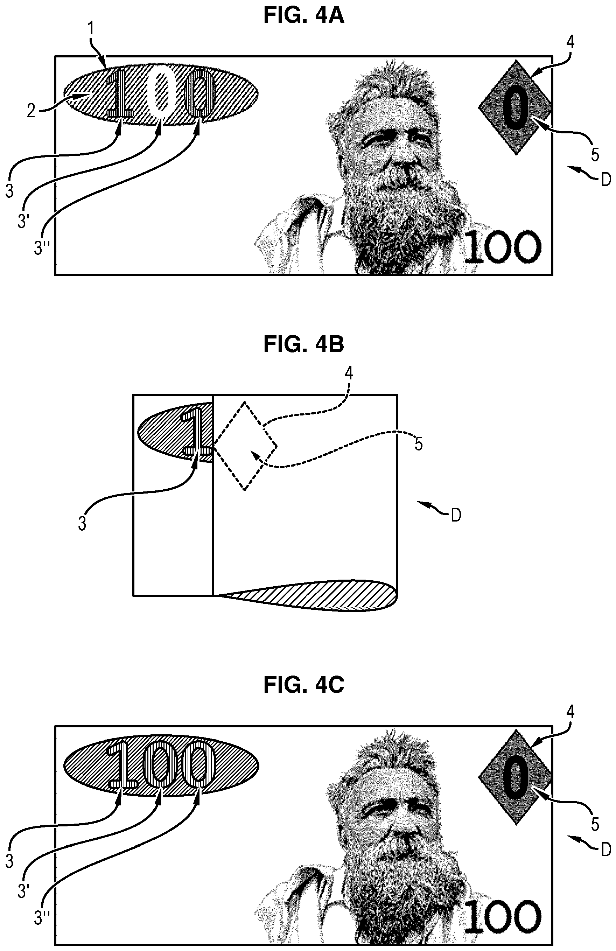

En référence aux figures 4A à 4C on a affaire, comme dans le précédent mode de réalisation, à une région texturée abrasive 5 portée par une partie transparente 4 du billet.

La région texturée présente la forme du chiffre « 0 ».

Par ailleurs, dans la zone 2 sont présents trois motifs 3, 3' et 3" qui forment ensemble le chiffre « 100 », le motif 3' constituant le chiffre « 0 » étant réalisé avec la composition mécano-luminescente conforme à l'invention, au contraire des motifs 3 et 3".

Dès lors, et comme montré à la figure 4B, dès que l'on superpose la partie 4 et que l'on opère une friction du motif 3' à l'aide de la zone texturée 5 et sous éclairage ultra-violet, on révèle une fluorescence qui peut être d'une couleur identique à celle des motifs 3 et 3", comme cela est représenté sur la figure 4C ou une modification de l'intensité de sa luminescence.

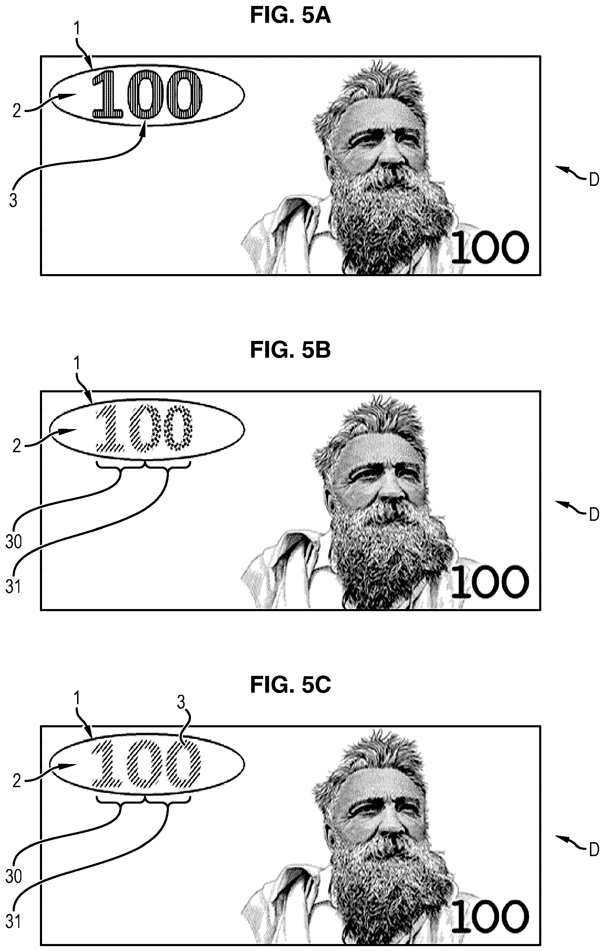

Enfin, en référence aux figures 5A à 5C, on a affaire à un motif 3 qui présente deux régions adjacentes 30 et 31, la première étant imprimée avec une encre fluorescente et la seconde avec la composition pour usage fiduciaire conforme à l'invention.

Sous éclairage à la lumière visible, l'ensemble du motif est visible de manière uniforme.

En revanche et comme montré à la figure 5B, sous un éclairage fluorescent, les régions 30 et 31 montrent des couleurs différentes.

Lorsque l'on gratte la région 31 au moyen d'un outil pointu, sa couleur ou son intensité de fluorescence est modifiée et devient identique à celle de la région 30. C'est la situation de la figure 5C.

Dans un autre mode de réalisation, les deux régions 30 et 31 pourraient être imprimées chacune avec une composition conforme à l'invention, donnant des couleurs de fluorescence identiques mais des couleurs ou des intensités différentes après friction.

De tous les exemples décrits dans la présente invention, mais aussi des modes de réalisation non décrits ici, il est aisé de comprendre que l'homme de la rue, confronté à un document, par exemple un billet de banque ou autre, sur lequel il émettrait un doute quant à son authenticité verra ce dernier se dissiper immédiatement en grattant ou en frottant doucement le motif 3 sous éclairage ultra-violet si celui-ci change d'intensité ou de couleur de luminescence à l'endroit sollicité mécaniquement.

La présente invention contribue de manière simple et directe à la manifestation de l'authenticité dudit document et renforce de manière évidente le niveau de sécurité des impressions fluorescentes et phosphorescentes.

Les différents essais menés par la demanderesse montrent qu'une valeur de longueur d'onde de lumière ultraviolette particulièrement appropriée pour provoquer la luminescence des composés utilisés est de 365 nm. Une longueur d'onde de 254 nm est également applicable, mais avec une réaction de luminescence du composé exposé qui est moins prononcée.

Le composé mécano-luminescent A peut être incorporé dans la pâte à papier servant à la fabrication du document de sécurité, dès lors bien sûr que celui-ci est au moins partiellement en papier, ou à base de papier.

Une autre méthode qui peut être envisagée pour apposer le composé mécano-luminescent A sur le document consiste, dans un premier temps, à le déposer sur un film de transfert à chaud - ceci par enduction ou impression standard par exemple- puis, dans un second temps, à transférer et faire adhérer ce film sur le document. Il est également possible de faire un transfert à froid.

Par ailleurs, il serait possible de doter un document de sécurité conforme à la présente invention d'un troisième niveau d'authentification. A cet effet, il est possible d'intégrer dans la composition (encre ou vernis), en même temps que le composé mécano-luminescent A, un élément de type traceur pour un troisième niveau, par exemple possédant des caractéristiques particulières d'émission aptes à être détectées par des capteurs de machines de tri automatiques (ex : photodiodes) ou des équipements off line (ex : spectrophotomètre, MEB etc).

Enfin, le composé mécano-luminescent A est susceptible d'être incorporé dans une composition compatible avec des moyens d'impression numérique (à jet d'encre par exemple), ceci à des fins de personnalisation du document.

## Revendications

1. Composition pour usage fiduciaire, **caractérisée en ce qu'**elle comprend une matrice d'impression se trouvant à l'état liquide ou pâteux avant son séchage, de préférence incolore, et un composé mécanoluminescent réversible répondant à la formule chimique A suivante : 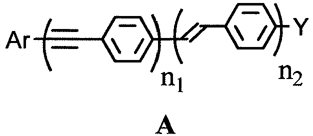 dans laquelle :
- Ar représente un hydrocarbure aromatique polycyclique monosubstitué, comprenant n cycles benzèniques, n étant compris entre 4 et 10,
- n1 est compris entre 0 et 10, n2 est compris entre 0 et 10, n1 et n2 n'étant pas simultanément égaux à 0,
- Y est un groupement organique ou hétéro-organique, choisi exclusivement parmi les groupements cyano, trifluorométhyl, formyl, ester, nitro, halogéno, sulfoxyde, sulfonyl, tricyanoéthènyl, ammonium et phosphonium.

2. Composition selon la revendication 1, **caractérisée en ce que** ledit composé de formule chimique A y est présent à hauteur de 0,1% à 25% en poids, de préférence de 1% à 10% en poids, de préférence encore de 3% à 8% en poids.

3. Composition selon la revendicationas 1 ou 2, **caractérisée en ce que** Ar est un groupement pyrèn-1-yl.

4. Composition selon la revendication 1 ou 2, **caractérisée en ce que** Ar est un groupement benzo[*c*]phénantrèn-2-yl.

5. Composition selon la revendication 3, **caractérisée en ce que** ledit composé mécanoluminescent réversible est le composé A dans lequel Ar est un groupement pyrèn-1-yl, n1 est égal à O et n2 est égal à 1.

6. Composition selon la revendication 3, **caractérisée en ce que** ledit composé mécanoluminescent réversible est le composé A dans lequel Ar est un groupement pyrèn-1-yl, n1 est égal à O et n2 est égal à 2.

7. Composition selon la revendication 4, **caractérisée en ce que** ledit composé mécanoluminescent réversible est le composé A dans lequel Ar est un groupement benzo[c]phénantrèn-2-yl, n1 est égal à 1 et n2 est égal à 1.

8. Composition selon la revendication 4, **caractérisée en ce que** ledit composé mécanoluminescent réversible est le composé A dans lequel Ar est un groupement benzo[c]phénantrèn-2-yl, n1 est égal à 1 et n2 est égal à 0.

9. Composition selon l'une des revendications 5 à 8, **caractérisée en ce que** Y est le groupe CN.

10. Composition selon l'une des revendications précédentes, **caractérisée en ce que** ladite matrice d'impression est une encre ou un vernis.

11. Composition selon l'une des revendications 1 à 9, **caractérisée en ce que** ladite matrice est choisie parmi une matrice d'impression en offset, sérigraphie, taille-douce, typographie, flexographie, jet d'encre, enduction directe ou héliogravure.

12. Document de sécurité, tel qu'un billet de banque, une carte à puce ou un passeport, **caractérisé en ce qu'**il est revêtu ou **en ce qu'**il contient un composé mécanoluminescent réversible A répondant à la formule chimique suivante : 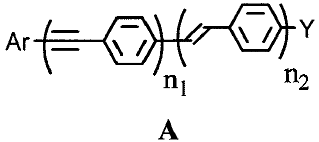 dans laquelle :
- Ar représente un hydrocarbure aromatique polycyclique monosubstitué, comprenant n cycles benzèniques, n étant compris entre 4 et 10,
- n1 est compris entre 0 et 10, n2 est compris entre 0 et 10, n1 et n2 n'étant pas simultanément égaux à 0,
- Y est un groupement organique ou hétéro-organique, choisi exclusivement parmi les groupements cyano, trifluorométhyl, formyl, ester, nitro, halogéno, sulfoxyde, sulfonyl, tricyanoéthènyl, ammonium et phosphonium.

13. Document selon la revendication 12, **caractérisé en ce que** ledit composé mécanoluminescent réversible de formule A est en surface, **en ce qu'**il revêt la forme d'une impression et **en ce qu'**il est initialement contenu avant séchage, dans une composition selon l'une des revendications 1 à 11.

14. Document selon la revendication 13, **caractérisé en ce que** ladite impression présente une épaisseur comprise entre 1 µm et 200 µm.

15. Document selon la revendication 13 ou 14, **caractérisé en ce que** ladite impression contenant ledit composé mécano-luminescent réversible de formule A est recouverte par un vernis, destiné à recouvrir en totalité ou partiellement les impressions figurant sur le document de sécurité.

16. Document selon la revendication 13 ou 14, **caractérisé en ce que** ladite impression contenant ledit composé mécano-luminescent réversible de formule A est recouverte par un film continu en matériau polymère, destiné à recouvrir en totalité ou partiellement les impressions figurant sur le document de sécurité.

17. Document selon l'une des revendications 12 à 16, **caractérisé en ce qu'**il comprend un élément de sécurité (1) constitué d'au moins une zone imprimée (2) à l'aide d'une composition conforme à l'une des revendications 1 à 11, ladite zone imprimée (2) présentant :
- une première couleur (C1) qui peut être incolore, dans le spectre de la lumière visible,
- une deuxième couleur (C2) différente de la première sous éclairage ultra-violet, et
- une troisième couleur (C3) différente desdites première et deuxième couleurs (C1, C2) ou une modification de l'intensité de sa luminescence, lorsque cette zone imprimée (2) est soumise à une sollicitation mécanique toujours sous éclairage ultra-violet, la troisième couleur (C3) ou la modification de l'intensité de la luminescence de la deuxième couleur (C2) de ladite zone imprimée (2) apparaissant à l'endroit de ladite sollicitation mécanique.

18. Document selon l'une des revendications 12 à 16, **caractérisé en ce qu'**il comprend un élément de sécurité (1) constitué d'au moins une zone imprimée (2), par exemple sous la forme d'un aplat, sur cette zone étant imprimé, par exemple et sans que ce soit limitatif, en offset, sérigraphie ou taille-douce, à l'aide d'une composition conforme à l'une des revendications 1 à 11, au moins un motif (3),
- ladite zone (2) et ledit motif (3) présentant dans le spectre de la lumière visible, une première couleur (C1) identique ou sensiblement identique et qui peut être incolore ;
- ladite zone (2) et ledit motif (3) présentant sous éclairage ultra-violet, une deuxième couleur (C2) identique ou sensiblement identique, différente de ladite première couleur (C1) ;
- ledit motif (3) présentant une troisième couleur (C3), différente des première et deuxième couleurs ou une modification de l'intensité de sa luminescence, lorsque ce motif (3) est soumis à une sollicitation mécanique toujours sous éclairage ultra-violet, la troisième couleur (C3) ou la modification de l'intensité de la luminescence de la deuxième couleur (C2) dudit motif (3) apparaissant à l'endroit de ladite sollicitation mécanique.

19. Document selon l'une des revendications 12 à 16, **caractérisé par le fait qu'**il comporte un élément de sécurité (1) constitué d'au moins une zone imprimée (2), par exemple sous la forme d'un aplat, sur cette zone (2) étant imprimé, par exemple et sans que ce soit limitatif, en offset, sérigraphie ou taille-douce, à l'aide d'une composition conforme à l'une des revendications 1 à 11, au moins un motif (3),
- ladite zone (2) et ledit motif (3) présentant respectivement une première couleur (C1) et une deuxième couleur (C2) différentes dans le spectre de la lumière visible ;
- ladite zone (2) et ledit motif (3) présentant respectivement une troisième couleur (C3) différente de la première couleur (C1) et une quatrième couleur (C4) différente de la deuxième couleur (C2) sous éclairage ultra-violet ;
- ledit motif (3) présentant une cinquième couleur (C5), différente des précédentes couleurs ou une modification de l'intensité de la luminescence de la quatrième couleur, lorsque ce motif est soumis à une sollicitation mécanique, toujours sous éclairage ultra-violet.

20. Document selon l'une des revendications 12 à 16, **caractérisé par le fait qu'**il comporte un élément de sécurité (1) constitué d'au moins une zone imprimée (2), par exemple sous la forme d'un aplat, sur cette zone (2) étant imprimé, par exemple et sans que ce soit limitatif, en offset, sérigraphie ou taille-douce, à l'aide d'une composition conforme à l'une des revendications 1 à 11, au moins un motif (3), ainsi, qu'au moins une région texturée abrasive (5), de sorte que par superposition de la région texturée abrasive (5) sur ledit motif (3) et sollicitation mécanique sous éclairage ultra-violet, ledit motif devient visible sous une couleur différente de sa couleur initiale ou présente une modification de l'intensité de sa luminescence.

21. Document selon la revendication 20, **caractérisé par le fait qu'**il présente une partie transparente (4) et que ladite région texturée (5) y est intégrée.

22. Document selon l'une des revendications 12 à 16, **caractérisé par le fait qu'**il comporte un élément de sécurité (1) constitué d'au moins une zone imprimée (2), par exemple sous la forme d'un aplat, sur cette zone étant imprimés, par exemple et sans que ce soit limitatif, en offset, sérigraphie ou en taille-douce, plusieurs motifs (3, 3', 3") dont l'un au moins (3') à l'aide d'une composition conforme à l'une des revendications 1 à 11, et qu'il présente une partie transparente (4) comportant une région texturée abrasive (5) qui présente la même forme que ledit motif (3') imprimé à l'aide de ladite composition, de sorte que par superposition et sollicitation mécanique sous éclairage ultra-violet, ledit motif (3') devient visible sous une couleur différente de sa couleur initiale ou présente une modification de l'intensité de sa luminescence.

23. Document selon l'une des revendications 20 à 22, **caractérisé par le fait que** ladite région texturée (5) est obtenue par embossage de type timbre sec ou en taille-douce encrée.

24. Document selon l'une des revendications 12 à 16, **caractérisé par le fait qu'**il comporte un élément de sécurité (1) constitué d'au moins une zone imprimée (2), par exemple sous la forme d'un aplat, sur cette zone étant imprimée, par exemple et sans que ce soit limitatif, en offset, sérigraphie ou en taille-douce, au moins un motif (3) comprenant deux régions adjacentes (30, 31), l'une de ces régions étant imprimée à l'aide d'une composition conforme à l'une des revendications 1 à 11.

25. Document selon l'une des revendications 13 à 24, **caractérisé en ce que** ladite impression, ladite zone imprimée (2) ou ledit motif (3) est réalisé par l'un des procédés suivants : offset, sérigraphie, taille-douce, typographie, flexographie, jet d'encre, enduction directe et héliogravure.

## Patentansprüche

1. Zusammensetzung für Kennzeichnungszwecke, **dadurch gekennzeichnet, dass** sie eine Druckmatrix vor dem Trocknen in flüssigem oder pastösem Zustand, vorzugsweise farblos, und eine reversible mechanolumineszente Verbindung mit der folgenden chemischen Formel A enthält: 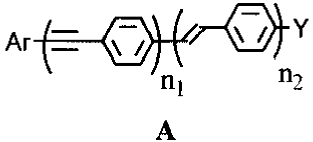 in der:
- Ar einen monosubstituierten polycyclischen aromatischen Kohlenwasserstoff darstellt, der n Benzolringe enthält, wobei n zwischen 4 und 10 liegt,
- n1 zwischen 0 und 10 liegt, n2 zwischen 0 und 10 liegt, wobei n1 und n2 nicht gleichzeitig gleich 0 sind,
- Y eine organische oder heteroorganische Gruppe ist, die ausschließlich aus Cyano-, Trifluormethyl-, Formyl-, Ester-, Nitro-, Halogen-, Sulfoxid-, Sulfonyl-, Tricyanoethylen-, Ammonium- und Phosphoniumgruppen ausgewählt ist.

2. Zusammensetzung nach Anspruch 1, **dadurch gekennzeichnet, dass** die Verbindung mit der chemischen Formel A darin mit einer Menge in Höhe von 0,1 bis 25 Gew.-% vorhanden ist, vorzugsweise 1 bis 10 Gew.-%, weiter vorzugsweise 3 bis 8 Gew.-%.

3. Zusammensetzung nach Anspruch 1 oder 2, **dadurch gekennzeichnet, dass** Ar eine Pyren-1-yl-Gruppe ist.

4. Zusammensetzung nach Anspruch 1 oder 2, **dadurch gekennzeichnet, dass** Ar eine Benzo[c]phenanthren-2-yl-Gruppe ist.

5. Zusammensetzung nach Anspruch 3, **dadurch gekennzeichnet, dass** die reversible mechanolumineszente Verbindung die Verbindung A ist, in der Ar eine Pyren-1-yl-Gruppe, n1 gleich 0 und n2 gleich 1 ist.

6. Zusammensetzung nach Anspruch 3, **dadurch gekennzeichnet, dass** die reversible mechanolumineszente Verbindung die Verbindung A ist, in der Ar eine Pyren-1-yl-Gruppe, n1 gleich 0 und n2 gleich 2 ist.

7. Zusammensetzung nach Anspruch 4, **dadurch gekennzeichnet, dass** die reversible mechanolumineszente Verbindung die Verbindung A ist, in der Ar eine Benzo[c]phenanthren-2-yl-Gruppe, n1 gleich 1 und n2 gleich 1 ist.

8. Zusammensetzung nach Anspruch 4, **dadurch gekennzeichnet, dass** die reversible mechanolumineszente Verbindung die Verbindung A ist, in der Ar eine Benzo[c]phenantren-2-yl-Gruppe, n1 gleich 1 und n2 gleich 0 ist.

9. Zusammensetzung nach einem beliebigen der vorstehenden Ansprüche 5 bis 8, **dadurch gekennzeichnet, dass** Y die CN-Gruppe ist.

10. Zusammensetzung nach einem beliebigen der vorstehenden Ansprüche, **dadurch gekennzeichnet, dass** die Druckmatrix eine Tinte oder ein Lack ist.

11. Zusammensetzung nach einem beliebigen der vorstehenden Ansprüche 1 bis 9, **dadurch gekennzeichnet, dass** die Matrix aus einer Offset-, Sieb-, Tiefdruck-, Typographie-, Flexo-, Tintenstrahl-, Direktbeschichtungs- oder Heliogravüre-Druckmatrix ausgewählt ist.

12. Sicherheitsdokument, wie eine Banknote, eine Chipkarte oder ein Reisepass, **dadurch gekennzeichnet, dass** es beschichtet ist, oder dass es eine reversible mechanolumineszente Verbindung A mit der folgenden chemischen Formel enthält: 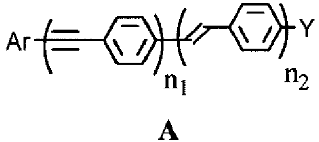 in der:
- Ar einen monosubstituierten polycyclischen aromatischen Kohlenwasserstoff darstellt, der n Benzolringe enthält, wobei n zwischen 4 und 10 liegt,
- n1 zwischen 0 und 10, n2 zwischen 0 und 10 liegt, wobei n1 und n2 nicht gleichzeitig gleich 0 sind,
- Y eine organische oder heteroorganische Gruppe ist, die ausschließlich aus Cyano-, Trifluormethyl-, Formyl-, Ester-, Nitro-, Halogen-, Sulfoxid-, Sulfonyl-, Tricyanoethylen-, Ammonium- und Phosphoniumgruppen ausgewählt ist.

13. Dokument nach Anspruch 12, **dadurch gekennzeichnet, dass** die reversible mechanolumineszente Verbindung der Formel A auf der Oberfläche ist, dass sie die Form eines Drucks hat, und dass sie vor dem Trocknen zunächst in einer Zusammensetzung nach einem beliebigen der vorstehenden Ansprüche 1 bis 11 enthalten ist.

14. Dokument nach Anspruch 13, **dadurch gekennzeichnet, dass** der Druck eine Dicke zwischen 1 µm und 200 µm aufweist.

15. Dokument nach Anspruch 13 oder 14, **dadurch gekennzeichnet, dass** der Druck, der die reversible mechanolumineszente Verbindung der Formel A enthält, mit einem Lack überzogen ist, der die auf dem Sicherheitsdokument erscheinenden Drucke ganz oder teilweise abdecken soll.

16. Dokument nach Anspruch 13 oder 14, **dadurch gekennzeichnet, dass** der Druck, der die reversible mechanolumineszente Verbindung der Formel A enthält, mit einem kontinuierlichen Film aus Polymermaterial überzogen ist, der die auf dem Sicherheitsdokument erscheinenden Drucke ganz oder teilweise abdecken soll.

17. Dokument nach einem beliebigen der vorstehenden Ansprüche 12 bis 16, **dadurch gekennzeichnet, dass** es ein Sicherheitselement (1) umfasst, das aus zumindest einem mit Hilfe einer Zusammensetzung nach einem beliebigen der vorstehenden Ansprüche 1 bis 11 gedruckten Bereich (2) besteht, wobei der gedruckte Bereich (2) folgendes aufweist:
- eine erste Farbe (C1), die im sichtbaren Lichtspektrum farblos sein kann,
- eine zweite Farbe (C2), die sich unter ultraviolettem Licht von der ersten unterscheidet, und
- eine von der ersten und zweiten Farbe (C1, C2)verschiedene dritte Farbe (C3) aufweist oder einer Änderung der Intensität ihrer Lumineszenz zeigt, wenn diese bedruckte Fläche (2) weiterhin unter ultravioletter Beleuchtung mechanisch beansprucht wird, wobei die dritte Farbe (C3) oder die Änderung der Intensität der Lumineszenz der zweiten Farbe (C2) der bedruckten Fläche (2) an der Stelle der mechanischen Beanspruchung.

18. Dokument nach einem beliebigen der vorstehenden Ansprüche 12 bis 16, **dadurch gekennzeichnet, dass** es ein Sicherheitselement (1) umfasst, das aus zumindest einer bedruckten Fläche (2), beispielsweise in Form eines Farbraums, besteht, auf dem beispielsweise und ohne dass dies einschränkend wäre, mit Offset-, Sieb- oder Tiefdruck unter Verwendung einer Zusammensetzung nach einem beliebigen der vorstehenden Ansprüche 1 bis 11 zumindest ein Muster (3) gedruckt wird,
- wobei der Bereich (2) und das Muster (3) im sichtbaren Lichtspektrum eine erste identische oder im Wesentlichen identische Farbe (C1) aufweisen, die farblos sein kann;
- wobei der Bereich (2) und das Muster (3) unter ultravioletter Beleuchtung eine zweite identische oder im Wesentlichen identische Farbe (C2) aufweisen, die sich von der ersten Farbe (C1) unterscheidet;
- wobei das Muster (3) eine von der ersten und zweiten Farbe verschiedene dritte Farbe (C3) aufweist, oder einer Änderung der Intensität seiner Lumineszenz zeigt, wenn dieses Muster (3) weiterhin unter ultravioletter Beleuchtung mechanisch beansprucht wird, wobei die dritte Farbe (C3) oder die Änderung der Intensität der Lumineszenz der zweiten Farbe (C2) des Musters (3) an der Stelle der mechanischen Beanspruchung erscheint.

19. Dokument nach einem beliebigen der vorstehenden Ansprüche 12 bis 16, **dadurch gekennzeichnet, dass** es ein Sicherheitselement (1) umfasst, das aus zumindest einer bedruckten Fläche (2), beispielsweise in Form eines Farbraums, besteht, auf dem beispielsweise und ohne, dass dies einschränkend wäre, mit Offset-, Sieb- oder Tiefdruck mit Hilfe einer Zusammensetzung nach einem beliebigen der vorstehenden Ansprüche 1 bis 11 zumindest ein Muster (3) gedruckt wird,
- wobei der Bereich (2) und das Muster (3) jeweils eine erste Farbe (C1) und eine zweite Farbe (C2) aufweisen, die sich im sichtbaren Lichtspektrum unterscheiden;
- wobei der Bereich (2) und das Muster (3) unter ultravioletter Beleuchtung jeweils eine von der ersten Farbe (C1) verschiedene dritte Farbe (C3) und eine von der zweiten Farbe (C2) verschiedene vierte Farbe (C4) aufweisen;
- wobei das Muster (3) eine von den vorhergehenden Farben verschiedene fünfte Farbe (C5) aufweist oder einer Änderung der Intensität der Lumineszenz der vierten Farbe zeigt, wenn dieses Muster weiterhin unter ultravioletter Beleuchtung mechanisch beansprucht wird.

20. Dokument nach einem beliebigen der vorstehenden Ansprüche 12 bis 16, **dadurch gekennzeichnet, dass** es ein Sicherheitselement (1) umfasst, das aus zumindest einer bedruckten Fläche (2), beispielsweise in Form eines Farbraums, besteht, auf dem beispielsweise und ohne, dass dies einschränkend wäre, mit Offset-, Sieb- oder Tiefdruck mit Hilfe einer Zusammensetzung nach einem beliebigen der vorstehenden Ansprüche 1 bis 11 zumindest ein Muster (3) gedruckt wird, sowie zumindest ein abrasiv strukturierter Bereich (5), so dass durch Überlagerung des abrasiv strukturierten Bereichs (5) auf dem Muster (3) und mechanische Beanspruchung unter ultravioletter Beleuchtung das Muster in einer von seiner Ausgangsfarbe verschiedenen Farbe sichtbar wird oder eine Veränderung der Intensität seiner Lumineszenz zeigt.

21. Dokument nach Anspruch 20, **dadurch gekennzeichnet, dass** es einen transparenten Teil (4) aufweist und dass der strukturierte Bereich (5) darin integriert ist.

22. Dokument nach einem beliebigen der vorstehenden Ansprüche 12 bis 16, **dadurch gekennzeichnet, dass** es ein Sicherheitselement (1) umfasst, das aus zumindest einer bedruckten Fläche (2), beispielsweise in Form eines Farbraums, besteht, auf dem beispielsweise und ohne dass dies einschränkend wäre, mit Offset-, Sieb- oder Tiefdruck mehrere Muster (3, 3', 3") gedruckt werden, davon zumindest eins (3') mit Hilfe einer Zusammensetzung nach einem beliebigen der vorstehenden Ansprüche 1 bis 11, und dass es einen transparenten Teil (4) aufweist, der einen abrasiv strukturierten Bereich (5) enthält, der die gleiche Form wie das mit der Zusammensetzung gedruckte Muster (3') zeigt, so dass durch Überlagerung und mechanische Beanspruchung unter ultravioletter Beleuchtung das Muster (3') in einer von seiner Ausgangsfarbe verschiedenen Farbe sichtbar wird oder eine Veränderung der Intensität seiner Lumineszenz zeigt.

23. Dokument nach einem beliebigen der vorstehenden Ansprüche 20 bis 22, **dadurch gekennzeichnet, dass** der strukturierte Bereich (5) durch Prägen mit Trockenstempel oder Tiefdruck mit Tinte erzielt wird.

24. Dokument nach einem beliebigen der vorstehenden Ansprüche 12 bis 16, **dadurch gekennzeichnet, dass** es ein Sicherheitselement (1) umfasst, das aus zumindest einer bedruckten Fläche (2), beispielsweise in Form eines Farbraums, besteht, auf dem beispielsweise und ohne dass dies einschränkend wäre, mit Offset-, Sieb- oder Tiefdruck zumindest ein Muster (3) gedruckt wird, das zwei benachbarte Bereiche (30, 31) umfasst, wobei einer dieser Bereiche mit einer Zusammensetzung nach einem beliebigen der vorstehenden Ansprüche 1 bis 11 bedruckt ist.

25. Dokument nach einem beliebigen der vorstehenden Ansprüche 13 bis 24, **dadurch gekennzeichnet, dass** der Druck, der bedruckte Bereich (2) oder das Muster (3) mit einem der nachstehenden Verfahren ausgeführt werden: Offsetdruck, Siebdruck, Tiefdruck, Typographie, Flexodruck, Tintenstrahl, Direktbeschichtung und Heliogravüre.

## Claims

1. Composition for fiduciary use, **characterised in that** it comprises a printing matrix that is liquid or pasty before drying, preferably colourless, and a reversible mechanoluminescent compound having the following chemical formula A: 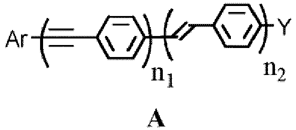 wherein:
- Ar represents a monosubstituted polycyclic aromatic hydrocarbon comprising n benzene rings, n being between 4 and 10,
- n1 is between 0 and 10, n2 is between 0 and 10, n1 and n2 not being simultaneously equal to 0,
- Y is an organic or hetero-organic group, chosen exclusively from the cyano, trifluoromethyl, formyl, ester, nitro, halogen, sulphoxide, sulphonyl, tricyanoethenyl, ammonium and phosphonium groups.

2. Composition according to claim 1, **characterised in that** said compound having chemical formula A is present therein at a rate of 0.1% to 25% by weight, preferably from 1% to 10% by weight, more preferably from 3% to 8% by weight.

3. Composition according to claim 1 or claim 2, **characterised in that** Ar is a pyren-1-yl group.

4. Composition according to claim 1 or claim 2, **characterised in that** Ar is a benzo[c]phenantren-2-yl group.

5. Composition according to claim 3, **characterised in that** said reversible mechanoluminescent compound is compound A wherein Ar is a pyren-1-yl group, n1 is equal to 0 and n2 is equal to 1.

6. Composition according to claim 3, **characterised in that** said reversible mechanoluminescent compound is compound A wherein Ar is a pyren-1-yl group, n1 is equal to 0 and n2 is equal to 2.

7. Composition according to claim 4, said reversible mechanoluminescent compound is compound A wherein Ar is a benzo[c]phenantren-2-yl group, n1 is equal to 1 and n2 is equal to 1.

8. Composition according to claim 4, **characterised in that** said reversible mechanoluminescent compound is compound A wherein Ar is a benzo[c]phenantren-2-yl group, n1 is equal to 1 and n2 is equal to 0.

9. Composition according to any of claims 5 to 8, **characterised in that** Y is the CN group.

10. Composition according to any of the above claims, **characterised in that** said printing matrix is an ink or a varnish.

11. Composition according to any of claims 1 to 9, **characterised in that** said matrix is chosen from an offset, screen, intaglio, typography, flexographic, ink-jet, direct coating or photo-engraving printing matrix.

12. Security document, such as a bank note, a chip card or a passport, **characterised in that** it is coated with or **in that** it contains a reversible mechanoluminescent compound having the following chemical formula A: 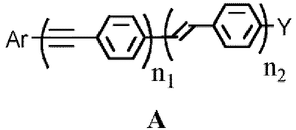 wherein:
- Ar represents a monosubstituted polycyclic aromatic hydrocarbon comprising n benzene rings, n being between 4 and 10,
- n1 is between 0 and 10, n2 is between 0 and 10, n1 and n2 not being simultaneously equal to 0,
- Y is an organic or hetero-organic group, chosen exclusively from the cyano, trifluoromethyl, formyl, ester, nitro, halogen, sulphoxide, sulphonyl, tricyanoethenyl, ammonium and phosphonium groups.

13. Document according to claim 12, **characterised in that** said reversible mechanoluminescent compound having formula A is on the surface, **in that** it takes the form of a print and **in that** it is initially contained before drying, in a composition according to any of claims 1 to 11.

14. Document according to claim 13, **characterised in that** said print has a thickness between 1 µm and 200 µm.

15. Document according to claim 13 or 14, **characterised in that** said print containing said reversible mechanoluminescent compound having formula A is coated with a varnish, intended to completely or partially coat the prints featuring on the security document.

16. Document according to claim 13 or 14, **characterised in that** said print containing said reversible mechanoluminescent compound having formula A is coated with a continuous film made of polymer material, intended to completely or partially coat the prints featuring on the security document.

17. Document according to any of claims 12 to 16, **characterised in that** it comprises a security element (1) consisting of at least one printed area (2) printed with a composition according to any of claims 1 to 11, said printed area (2) having:
- a first colour (C1) which may be colourless, in the visible light spectrum,
- a second colour (C2) different from the first one in ultraviolet light, and
- a third colour (C3) different from said first and second colours (C1, C2) or a modification of the intensity of the luminescence thereof, when said printed area (2) is subjected to mechanical stress also in ultraviolet light, the third colour (C3) or the modification of the intensity of the luminescence of the second colour (C2) of said printed area (2) appearing at the location of said mechanical stress.

18. Document according to any of claims 12 to 16, **characterised in that** it comprises a security element (1) consisting of at least one printed area (2), for example in the form of a uniform tint area, at least one pattern (3) being printed on this area, by way of example and without being restrictive, by offset, screen or intaglio printing, using a composition according to any of claims 1 to 11,
- said area (2) and said pattern (3) exhibiting in the visible light spectrum, a first identical or substantially identical colour (C1), which may be colourless;
- said area (2) and said pattern (3) exhibiting in ultraviolet light, a second identical or substantially identical colour (C2), different from said first colour (C1);
- said pattern (3) exhibiting a third colour (C3), different from the first and second colours or a modification of the intensity of the luminescence thereof, when this pattern (3) is subjected to mechanical stress also in ultraviolet light, the third colour (C3) or the modification of the intensity of the luminescence of the second colour (C2) of said pattern (3) appearing at the location of said mechanical stress.

19. Document according to any of claims 12 to 16, **characterised in that** it comprises a security element (1) consisting of at least one printed area (2), for example in the form of a uniform tint area, at least one pattern (3) being printed on this area (2), by way of example and without being restrictive, by offset, screen or intaglio printing, using a composition according to any of claims 1 to 11,
- said area (2) and said pattern (3) respectively exhibiting a first colour (C1) and a second colour (C2) which are different in the visible light spectrum;
- said area (2) and said pattern (3) respectively exhibiting a third colour (C3) different from the first colour (C1) and a fourth colour (C4) different from the second colour (C2), in ultraviolet light;
- said pattern (3) exhibiting a fifth colour (C5), different from the previous colours or a modification of the intensity of the luminescence of the fourth colour, when subjected to mechanical stress, also in ultraviolet light.

20. Document according to any of claims 12 to 16, **characterised in that** it comprises a security element (1) consisting of at least one printed area (2), for example in the form of a uniform tint area, at least one pattern (3) being printed on this area (2), by way of example and without being restrictive, by offset, screen or intaglio printing, using a composition according to any of claims 1 to 11, along with at least one abrasive textured region (5), such that by overlaying the abrasive textured region (5) on said pattern (3) and applying mechanical stress in ultraviolet light, said pattern becomes visible in a different colour to the initial colour thereof or exhibits a modification of the intensity of the luminescence thereof.

21. Document according to claim 20, **characterised in that** it has a transparent portion (4) and said textured region (5) is incorporated therein.

22. Document according to any of claims 12 to 16, **characterised in that** it comprises a security element (1) consisting of at least one printed area (2), for example in the form of a uniform tint area, a plurality of patterns (3, 3', 3'') being printed on this area, by way of example and without being restrictive, by offset, screen or intaglio printing, of which at least one (3') is printed using a composition according to any of claims 1 to 11, and **in that** it has a transparent portion (4) comprising an abrasive textured region (5) which has the same shape as said pattern (3') printed using said composition, such that by overlaying and applying mechanical stress in ultraviolet light, said pattern (3') becomes visible in a different colour to the initial colour thereof or exhibits a modification of the intensity of the luminescence thereof.

23. Document according to any of claims 20 to 22, **characterised in that** said textured region (5) is obtained by dry stamp embossing or inked intaglio.

24. Document according to any of claims 12 to 16, **characterised in that** it comprises a security element (1) consisting of at least one printed area (2), for example in the form of a uniform tint area, at least one pattern (3) comprising two adjacent regions (30, 31) being printed on this area, by way of example and without being restrictive, by offset, screen or intaglio printing, one of these regions being printed using a composition according to any of claims 1 to 11.

25. Document according to any of claims 13 to 24, **characterised in that** said print, said printed area (2) or said pattern (3) is embodied using one of the following processes: offset, screen, intaglio, typography, flexography, ink-jet, direct coating or photo-engraving.
